Europäisches Patentamt

European Patent Office

Office européen des brevets

(19)

(11) **EP 0 960 042 B1**

(12) **EUROPÄISCHE PATENTSCHRIFT**

(45) Veröffentlichungstag und Bekanntmachung des Hinweises auf die Patenterteilung:
**24.07.2002  Patentblatt 2002/30**

(51) Int Cl.$^7$: **B60T 8/00**

(21) Anmeldenummer: **98905402.8**

(22) Anmeldetag: **04.02.1998**

(86) Internationale Anmeldenummer:
**PCT/EP98/00605**

(87) Internationale Veröffentlichungsnummer:
**WO 98/35866 (20.08.1998 Gazette 1998/33)**

(54) **VERFAHREN ZUM ERKENNEN UND DÄMPFEN VON ANTRIEBSSTRANGSCHWINGUNGEN**

METHOD FOR RECOGNIZING AND DAMPING WHEEL AND DRIVE TRAIN VIBRATIONS

PROCEDE POUR IDENTIFIER ET AMORTIR LES VIBRATIONS D'UNE CHAINE CINEMATIQUE

(84) Benannte Vertragsstaaten:
**DE FR GB**

(30) Priorität: **17.02.1997  DE 19705947**

(43) Veröffentlichungstag der Anmeldung:
**01.12.1999  Patentblatt 1999/48**

(73) Patentinhaber: **Continental Teves AG & Co. oHG**
**60488 Frankfurt (DE)**

(72) Erfinder:
 • **JANSSEN, Gunnar**
 **D-61381 Friedrichsdorf (DE)**
 • **BURKHARD, Dieter**
 **D-67714 Waldfischbach-Burgalben (DE)**
 • **SCHMIDT, Robert**
 **D-56477 Rennerod (DE)**
 • **BAUER, Thomas**
 **D-56859 Bullay (DE)**

(74) Vertreter: **Blum, Klaus-Dieter**
**Continental Teves AG & Co. oHG,**
**Guerickestrasse 7**
**60488 Frankfurt (DE)**

(56) Entgegenhaltungen:
**EP-A- 0 180 721         WO-A-90/06250**
**GB-A- 2 289 097**

## Beschreibung

Die Erfindung bezieht sich auf ein Verfahren zum Erkennen und Dämpfen von Antriebsstrangschwingungen, bei dem während eines (ABS)geregelten Bremsmanövers zur Erkennung der Antriebsstrangschwingungen der Geschwindigkeitsverlauf der angetriebenen Räder analysiert und das Auftreten von Schwingungen mit einer für Antriebsstrangschwingungen typischen Frequenz festgestellt wird.

Aus der WO 90/06250 ist bereits ein Antiblokkierregelsystem bekannt, das Schaltmittel zur Erkennung von Rad- und Achsschwingungen und Beeinflussungsmittel zum Einleiten von Maßnahmen zur Dämpfung solcher Schwingungen enthält. Das Drehverhalten der Räder wird mit Radsensoren gemessen. Nach dieser Schrift wird als Kriterium zur Schwingungserkennung ausgewertet, daß bei Vorliegen einer Schwingung die Zykluszeiten etwa gleich groß sind.

Bei einem aus der EP-A-0 262 602 bekannten Verfahren wird die zweite zeitliche Ableitung der Geschwindigkeit eines Antriebsrades mit einem Referenzwert verglichen und ein Antriebsstrangschwingen anzeigendes Signal abgegeben, wenn die zweite zeitlichje Ableitung den Referenzwert überschreitet.

Des weiteren ist in der GB 2 289 097 A ein Antiblockiersystem beschrieben, bei dem aus den Geschwindigkeiten der angetriebenen Räder die Drehgeschwindigkeit am Differential ermittelt und durch Filterung dieses Signals festgestellt wird, ob dieser Drehgeschwindigkeit eine Schwingungskomponente, die im Frequenzbereich der Antriebsstrangschwingungen liegt, überlagert ist. Wenn zwei Bedingungen erfüllt sind, nämlich wenn die Schwingungsfrequenz im Bereich zwischen 5 und 12 Hz liegt und wenn das gefilterte Signal einen Schwellwert überschreitet, liegen Antriebsstrangschwingungen vor. Es wird eine die Schwingungen dämpfende Korrektur der Bremsdruckmodulation vorgenommen.

Der vorliegenden Erfindung liegt nun die Aufgabe zugrunde, ein zuverlässiges Verfahren zu entwickeln, mit dem kritische, Gegenmaßnahmen, d.h. Dämpfungsmaßnahmen erfordernde Rad- oder Antriebsstrangschwingungen erkannt und ungerechtfertigte Regelungseingriffe vermieden werden können. Außerdem sollen die Schwingungen wirkungsvoll gedämpft werden.

Es hat sich gezeigt, daß diese Aufgaben durch die in Anspruch 1 beschriebenen Verfahren gelöst werden. Es wird ein Signal gewonnen, das als Basis für eine wirkungsvolle Dämpfung der Antriebsstrangschwingungen ohne Gefährdung der Sicherheit des Fahrzeugs ausgewertet werden kann.

Erfindungsgemäß wird also ein Verfahren vorgeschlagen, bei dem beim Auftreten von Schwingungen mit einer innerhalb eines kritischen Bereichs liegenden Frequenz, der den Frequenzbereich typischer Antriebsstrangschwingungen einschließt, radindividuell die Dauer des Schwingungszustandes festgestellt oder die Anzahl der aufeinanderfolgenden Schwingungen oder Halbschwingungen gezählt wird und bei dem beim Erreichen eines vorgegebenen Zählerstandes ein Erkennen von Antriebsstrangschwingungen signalisiert wird, wenn zu diesem Zeitpunkt die Fahrzeugbeschleunigung über einem vorgegebenen Grenzwert liegt und wenn zu diesem Zeitpunkt am zweiten Rad der gleichen Achse keine Schwingungserkennung ausgelöst ist.

Zur Dämpfung der Schwingungen wird beim Erkennen der kritischen Schwingungen an einem nach den vorgegebenen Kriterien ausgewählten Antriebsrad die Bremsdruckregelung dieses Rades für eine bestimmte Zeitspanne auf eine Sonderregelung, die die Schwingungsdämpfung bewirkt, umgeschaltet.

In den Unteransprüchen sind vorteilhafte Ausführungsbeispiele der erfindungsgemäßen Verfahren beschrieben. So ist es beispielsweise von besonderem Vorteil, wenn das Überschreiten eines Zählerstandes von 3 bis 7, insbesondere von 4, aufeinanderfolgenden Halbschwingungen als Voraussetzung für die Antriebsstrangschwingungserkennung vorgegeben wird.

Es hat sich als zweckmäßig erwiesen, den Grenzwert für die Fahrzeugbeschleunigung, der zur Schwingungserkennung überschritten sein muß, mit -0,6 g bis -0,3 g oder mit etwa -0,5 g vorzugeben. Dadurch ist sichergestellt, daß die erfindungsgemäße Schwingungserkennung nur im Niedrigreibwert-Bereich stattfindet.

Nach einem Ausführungsbeispiel des Verfahrens zur Dämpfung der Schwingungen wird nach dem Einsetzen der Sonderregelung ein Bremsdruckabbau an diesem Rad verhindert und ein regelungsbedingter Bremsdruckaufbau höchstens verzögert und/oder nur mit flachem oder abgeflachtem Gradienten zugelassen. Es kann auch zweckmäßig sein, während der Sonderregelung den Bremsdruck zumindest annähernd konstantzuhalten. Die Sonderregelung wird erst beendet, wenn der Bremsschlupf des Rades einen vorgegebenen, hohen Grenzwert in der Größenordnung zwischen 40% und 60%, z.B. von 50%, überschreitet.

Ferner ist es erfindungsgemäß vorgesehen, Radschwingungen, die in einem vorgegebenen, für Antriebsstrangschwingungen typischen Frequenzbereich von z.B. 5 Hz und 23 Hz liegen, die bei einer über einem Grenzwert liegenden Fahrzeugbeschleunigung auftreten und die über eine vorgegebene Zeitspanne oder Schwingungszahl hinaus andauern, als kritisch zu bewerten.

Auf Radschwingungen bzw. Antriebsstrangschwingungen soll sehr schnell reagiert werden, doch ist ein nicht gerechtfertigter Eingriff zu vermeiden. Daher wird nach einen Ausführungsbeispiel die Mindestzahl von 5 aufeinanderfolgenden Halbschwingungen als Kriterium für das Umschalten auf die Sonderregelung bzw. auf das Einleiten von Dämpfungsmaßnahmen bewertet.

Weitere Einzelheiten der Erfindung gehen aus der folgenden Beschreibung von Ausführungsbeispielen anhand der beigefügten Abbildungen hervor.

Es zeigen:

Fig. 1 ein Flußdiagramm zur Veranschaulichung der Schwingungserkennung gemäß einem Ausführungsbeispiel der Erfindung,

Fig. 2a im Diagramm einen typischen Radgeschwindigkeitsverlauf während eines ABS-geregelten Bremsmanövers,

Fig. 2b in gleicher Darstellungsweise wie Fig. 2a den Radgeschwindigkeitsverlauf beim Auftreten von Antriebsstrangschwingungen und

Fig. 3 Diagramme zur Veranschaulichung des Verlauf der Radgeschwindigkeiten und der Bremsdrücke während eines ABS-geregelten Bremsvorgangs beim Auftreten von Antriebsstrangschwingungen und das Auslösen von Dämpfungsmaßnahmen.

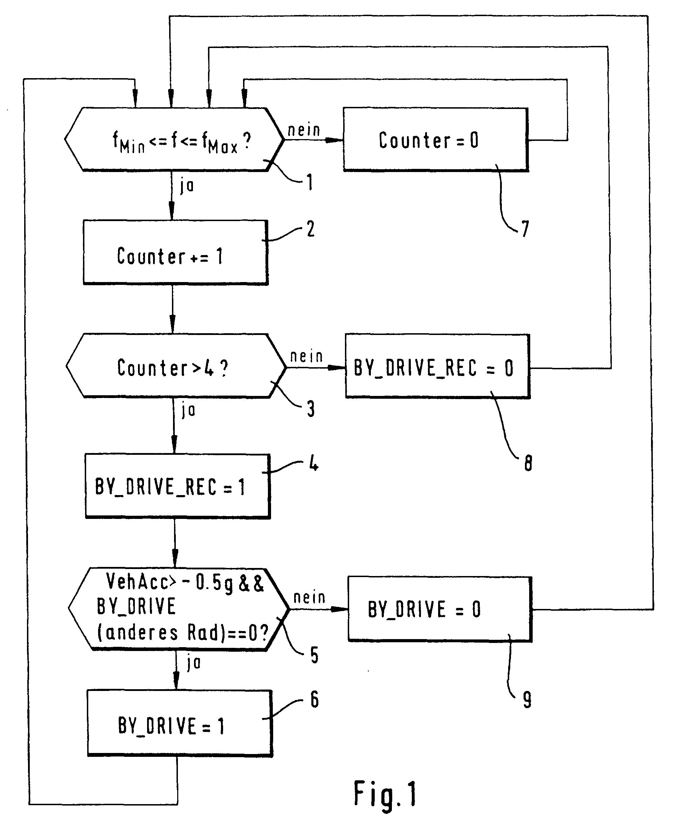

Das Flußdiagramm nach Fig. 1, das die einzelnen Schritte und den prinzipiellen Entscheidungsablauf in vereinfachter Form wiedergibt, veranschaulicht das erfindungsgemäße Verfahren. Zum Erkennen von Radschwingungen bzw. Antriebsstrangschwingungen wird zunächst in einem Programmschritt 1 oder Filter 1 festgestellt, ob die Schwingungsfrequenz f in einem für Antriebsschwingungen typischen Frequenzbereich liegt. Als zweckmäßig hat sich ein Frequenzbereich von

$$f_{Min} = 5 \text{ Hz bis } f_{Max} = 23 \text{ Hz}$$

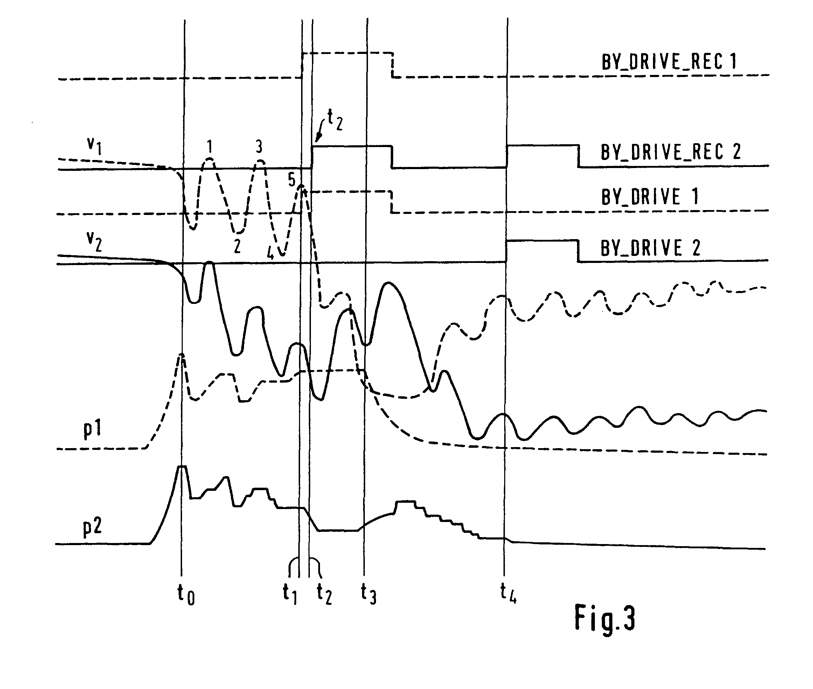

erwiesen. Liegen die Schwingungen in diesem Bereich ("ja") und wird eine bestimmte Mindestdauer des Schwingens bzw. eine bestimmte Mindestzahl von Schwingungen festgestellt, folgt der nächste Schritt im Flußdiagramm in Richtung auf eine Dämpfungsmaßnahme. Im dargestellten Beispiel ist ein Zähler 2 vorgesehen, der bei jeder Halbwelle der Schwingung, insbesondere bei jedem "peak" (siehe Fig. 3) der Antriebsstrangschwingung um den Wert "1" inkrementiert wird und der reagiert (Schritt 3), wenn der Zählwert "4" überschritten wird. Beim Überschreiten des Zählerstandes "4" wird in dem Flußdiagramm nach Fig. 1 ein Erkennungssignal

BY_DRIVE_REC = 1

gesetzt, also gewissermaßen eine Vorstufe einer Schwingungserkennung. Dies geschieht in dem Programmschritt 4.

Als nächstes gilt es im Schritt 5 festzustellen, ob die Fahrzeugbeschleunigung über einem vorgegebenen Mindestwert von z.B. -0,5 g liegt, d.h.

VehAcc > -0,5g ,

und ob auch die zweite Bedingung

BY_ DRIVE(anderes Rad) = 0 ?

erfüllt ist. Eine relativ hohe Fahrzeugbeschleunigung (>-0,5g) bzw., in anderen Worten, eine unter -0,5g liegende Verzögerung beinhaltet eine Aussage über den momentanen Straßenzustand bzw. Reibbeiwert; bei hoher Fahrzeugverzögerung, die aus physikalischen Gründen nur bei günstigen Straßenbedingungen möglich ist, soll die erfindungsgemäße Dämpfungsmaßnahme nicht durchgeführt werden.

Die zweite Bedingung

BY_DRIVE(anderes Rad) = 0

bzw. die von dieser Bedingung abhängige Entscheidung hat zur Folge, daß die Dämpfungsmaßnahme stets nur auf eines der beiden angetriebenen Räder - es werden hier nur Fahrzeuge mit einer angetriebenen Achse betrachtet - angewendet wird. Dadurch wird es möglich, relativ "drastische" Dämpfungsmaßnahmen zu verwirklichen, bei denen z.B. kurzzeitig ein sehr hoher Bremsschlupf in Kauf genommen wird. In einem Ausführungsbeispiel einer Dämpfungsmaßnahme setzt der Druckabbau an dem geregelten Rad erst ein, wenn ein relativer Schlupf von 50 % überschritten wird.

Sind die im Entscheidungsschritt 5 überprüften Bedingungen erfüllt ("ja"), wird, wie Programmschritt 6 symbolisiert, Schwingungserkennung, d.h. das Erkennen Antriebsstrangschwingungen signalisiert. Für das betreffende Antriebsrad gilt

BY_DRIVE = 1 .

Für dieses Rad wird für eine vorgegebene Zeitspanne eine Sonderregelung ausgelöst, die die Antriebsstrangschwingungen wirkungsvoll dämpft. Die Standard-Bremsdruckregelung des Rades wird für eine bestimmte Zeitspanne modifiziert; dies wird nachfolgend anhand der Figur 3 näher erläutert.

In dem Flußdiagramm nach Fig. 1 ist somit

BY_DRIVE_REC

das eigentliche Schwingungs-Erkennungssignal oder Erkennungs-Bit; "BY_ DRIVE" läßt sich dagegen als Steuersignal oder Steuer-Bit interpretieren. BY_DRIVE wird nur dann gesetzt (d.h. BY_DRIVE = 1), wenn, wie bereits zuvor beschrieben, die berechnete Fahrzeugverzögerung kleiner ist als -0,5 g ist und wenn das Steuer-Bit (BY_DRIVE) für das andere Antriebsrad nicht oder noch nicht gesetzt ist, d.h.

BY_DRIVE anderes Rad = 0.

Das Steuersignal BY_DRIVE wird folglich nur bei Bremsvorgängen auf Fahrbahnen mit niedrigem bis mittlerem Reibbeiwert und immer nur für eines der beiden Antriebsräder gesetzt. Sobald die Fahrzeugverzögerung größer wird als der vorgegebene Grenzwert, im vorliegenden Beispiel größer als -0,5 g, wenn die Schwingungen abgeklungen sind oder den Frequenzbereich > $f_{Min}$ ; < $f_{Max}$ verlassen haben, so daß "BY_DRIVE_REC" von 1 auf 0 wechselt, endet die Schwingungserkennung und damit die durch die Schwingserkennung an dem betreffenden Rad ausgelöste Dämpfungsmaßnahme.

"BY_DRIVE" dient beispielsweise als Steuer-Bit für die Umschaltung oder Modifizierung der Druckmodulation an den Antriebsrädern.

Das Zurücksetzen des Zählers, wenn die Frequenz außerhalb des vorgegebenen, kritschen Bereichs liegt, der Status des Erkennungssignals (BY_DRIVE_REC=0) bei zu niedrigem Zählerstand und die Nicht-Erfüllung der UND-Bedingung 5 werden in Fig. 1 durch die Programmschritte 7, 8 und 9 symbolisiert.

Fahrversuche haben gezeigt, daß durch die beschriebene Schwingungserkennung und durch entsprechende Dämpfungsmaßnahmen die störenden Antriebsstrangschwingungen wirksam und schnell unterdrückt werden können. Bei einer Erkennungsbandbreite von 5 Hz bis 23 Hz und bei einer Reaktion nach fünf Halbschwingungen (Zählerstand > 4 gemäß Programmschritt 3 in Fig. 1) werden in der Praxis die Antriebsstrangschwingungen nach etwa 250 ms erkannt. Durch die vorgenannten drastischen Dämpfungsmaßnahmen vergehen in der Praxis vom Zeitpunkt des Schwingungsbeginns bis zum Ausklingen der Schwingungen ca. 700 bis 800 ms.

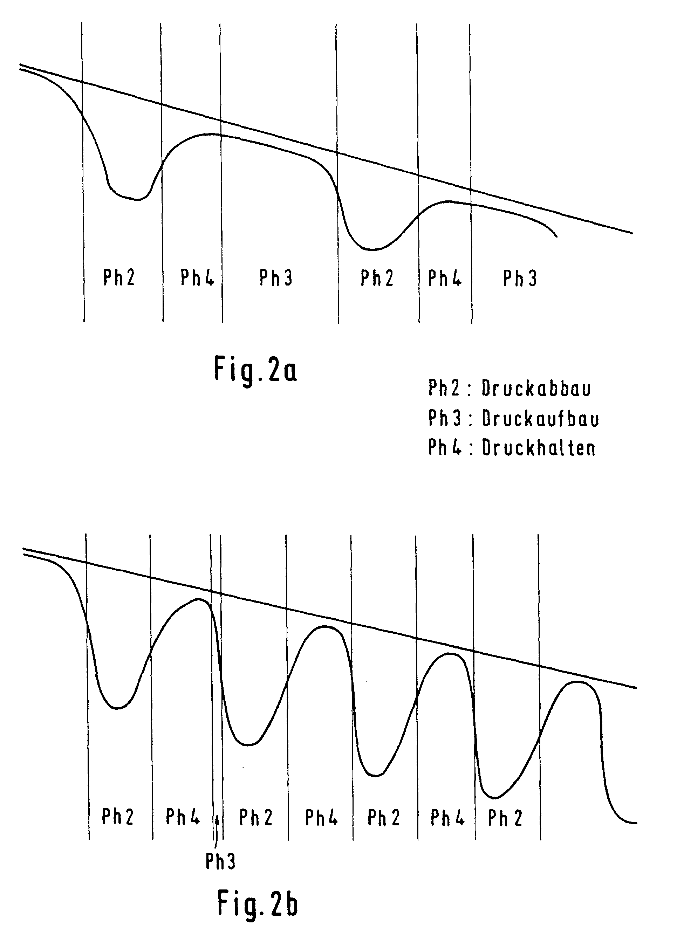

Fig. 2a veranschaulicht den Geschwindigkeitsverlauf eines Rades während eines normalen geregelten Bremsvorgangs. Wenn man den Regelungsvorgang und die Regelungsreaktion, wie in Fig. 2a angedeutet, in aufeinanderfolgende Phasen Ph2, Ph4, Ph3 unterscheidet, findet in der Phase Ph2 der Druckabbau, in der Phase Ph3 der Druckaufbau und in der Phase Ph4 im wesentlichen ein Druckhalten, ggf. ein vorzeitiger Druckaufbau, statt.

Treten bei dem ABS-geregelten Bremsmanöver Antriebsstrangschwingungen auf, führt dies zu dem in Fig. 2b dargestellten Verlauf der Radgeschwindigkeit. Ohne Dämpfungsmaßnahmen stellt sich ein schneller Wechsel zwischen Druckabbau- und Druckaufbauphasen ein, die Regelfrequenz wird hoch. Dies hat Komforteinbußen, störende Geräusche, erhöhten Verschleiß und eventuell sicherheitskritische Regelvorgänge zur Folge.

In dem Meßschrieb nach Fig. 3 ist als Ausschnitt aus einem ABS-geregelten Bremsmanöver der Geschwindigkeitsverlauf

$v_1$, $v_2$

der beiden Antriebsräder eines Fahrzeugs in einer durch Antriebsstrangschwingungen belasteten Bremsphase wiedergegeben. Außerdem sind die Erkennungs- und Steuerungssignale

BY_DRIVE_REC 1,2

(d.h. am Rad "1", Rad "2") und

BY_DRIVE 1,2

dargestellt. Die durchgehenden Kennlinien gelten für das Antriebsrad 1, die gestrichelten Linien für das Antriebsrad 2.

Es sind der Geschwindigkeitsverlauf der beiden Räder und der Bremsdruck

$p1$, $p2$

in den zugehörigen Radbremsen dargestellt.

Die Antriebsräder mit den Radgeschwindigkeiten $v_1$, $v_2$ geraten nach dem Einsetzen der Blockierschutzregelung zum Zeitpunkt $t_0$ in Schwingungen. Die Schwingungsfrequenz f (vgl. Fig. 1) liegt in dem für Antriebsstrangschwingungen typischen Bereich und in dem durch das Filter 1 vorgegebenen Frequenzbereichs. Die Schwingungshalbwellen werden durch den Zähler 2 gezählt. Der Zählerstand erreicht zum Zeitpunkt $t_1$ den Wert "5", überschreitet also zu diesem Zeitpunkt $t_1$ den Grenzwert "4" und löst dadurch ein Erkennungssignal BY_DRIVE_REC 1 aus (siehe oberste Kennlinie in Fig. 3). Zu diesem Zeitpunkt $t_1$ liegt die Fahrzeugbeschleunigung über -0,5 g (dies ist in Fig. 3 nicht dargestellt); außerdem ist zum Zeitpunkt $t_1$ das Signal BY_DRIVE 2 , also der Steuer-Bit des "anderen" Rades, noch nicht gesetzt, so daß nunmehr für dieses Antriebsrad 1 ein Erkennungs- oder Steuersignal

BY DRIVE 1 = 1

abgegeben und dadurch an diesem Rad eine Dämpfungsmaßnahme ausgelöst wird. Wie dem Verlauf des Bremsdruckes p1 am Antriebsrad 1 zu entnehmen ist, wird der Bremsdruck im Anschluß an $t_1$ konstantgehalten, obwohl bei "normaler" Bremsdruckregelung die starke Verzögerung oder der ansteigende Schlupf am Rad 1 einen Druckabbau zur Folge haben müßte.

Der Schlupf am Antriebsrad 1 erreicht schließlich zum Zeitpunkt $t_3$ einen bestimmten Grenzwert, z.B. einen relativen Schlupfwert von 50 %, so daß nun unabhängig von den Schwingungs-Erkennungssignalen ein regelungsbedingter Abbau des Bremsdruckes p1 erfolgt. Dieser Druckabbau hat dann, wie die Geschwindigkeitskurve $v_1$ erkennen läßt, sehr bald eine Erholung des Rades 1 und Annäherung der Radgeschwindigkeit $v_1$ an die (nicht dargestellte) Fahrzeuggeschwindigkeit zur Folge.

Das zweite Antriebsrad mit der Geschwindigkeit $v_2$ gerät ebenfalls etwa ab dem Zeitpunkt $t_0$ ins Schwingen. Dies wird jedoch im dargestellten Beispiel nicht "erkannt" bzw. führt nicht zu Dämpfungsmaßnahmen am Rad 2, weil als erstes, nämlich zum Zeitpunkt $t_1$, eine Schwingungserkennung am Rad 1 stattfindet. Die geringe zeitliche Differenz zwischen $t_1$ und $t_2$, die sich auf eine entsprechende Verzögerung des Signales BY_DRIVE_REC 2 gegenüber dem Signal BY_DRIVE_REC 1 auswirkt, veranschaulicht dies. Durch die Beschränkung der Dämpfungsmaßnahmen auf ein bestimmtes Antriebsrad wird es möglich, eine radikale, "drastische" Dämpfungsmaßnahme vorzusehen, die in sehr kurzer Zeit zum Abklingen der Antriebsstrangschwingungen führt. Ein Vergleich des Bremsdruckverlaufs p1 am Rad 1, das der Sonderregelung unterliegt, mit dem Druck p2 am Antriebsrad 2, das normal geregelt wird, veranschaulicht die Unterschiede. Durch die beschriebene Konstanthaltung des Bremsdruckes in der Zeitspanne von $t_1$ bis $t_3$ und die Inkaufnahme eines sehr hohen Bremsschlupfes wird die wirkungsvolle Dämpfung erreicht. Der Abbau des Bremsdrucks p2 am Rad 2 setzt dagegen als Folge des Radverlaufs $v_2$ bereits vor dem Zeitpunkt $t_2$ ein.

Die Erkennungssignale im Anschluß an $t_4$ führen in dem in Fig. 3 dargestellten Beispiel eines Bremsvorgangs zu keinen weiteren Dämpfungsmaßnahmen, weil offensichtlich der Bremsdruck bereits weitgehend abgebaut ist oder der geregelte Bremsvorgang weitgehend beendet ist. Die Amplituden der überlagerten Schwingungen nach $t_4$ sind relativ gering.

Fig. 3 zeigt also ein Beispiel einer wirkungsvollen Maßnahme zur Schwingungsdämpfung als Folge der erfindungsgemäßen Antriebsstrangschwingungserkennung, die auch die Auswahl oder Erkennung eines der beiden Räder nach vorgegebenen Kriterien und damit die Vorbereitung für die Dämpfungsmaßnahme umfaßt; da die Radschwingungen durch Antriebsstrangschwingungen hervorgerufen werden, treten solche Schwingungen natürlich an beiden Antriebsrädern auf, wenn auch ggf. mit unterschiedlicher Intensität und Phasenlage.

Die Wahl der Erkennungsbandbreite von 5 Hz bis 23 Hz, realisiert durch das Filter 1 gemäß Fig. 1, und das Zählen von mindestens fünf aufeinanderfolgenden Halbschwingungen als eine Voraussetzung für die Schwingungserkennung, haben einerseits eine sichere Reaktion auf Schwingungen und andererseits eine schnelle Erkennung und damit Auslösung von Gegenmaßnahmen bzw. Dämpfungsmaßnahemen zur Folge. In der Praxis werden auf diese Weise Antriebsstrangschwingungen nach spätestens 250 ms erkannt und können in einem daran anschließenden Zeitraum von 400 ms- 600 ms wirksam gedämpft werden.

Antriebsstrangschwingungen treten vor allem bei geregelten Bremsvorgängen im eingekuppelten Zustand auf bestimmten Niedrigreibwertfahrbahnen auf. Besonders stark sind sie auf sogenanntem "Peak-Eis", nämlich bei Straßenbedingungen, bei denen der Reibwert nur innerhalb eines relativ schmalen Schlupfbereichs maximal ist und außerhalb dieses Bereichs schnell abnimmt.

Eine Analyse ergab, daß die Druckmodulation, die ein geregelter Bremsvorgang zur Folge hat, im ungünstigsten Fall die Schwingungsneigung der Antriebsräder verstärkt, indem genau dann Druckabbau erfolgt, wenn das Rad in der Wiederbeschleunigungsphase ist und, umgekehrt, genau dann Druck aufgebaut wird, wenn das Rad in den Schlupf läuft. Um diesem Verhalten entgegenzuwirken, wurde das erfindungsgemäße Verfahren entwickelt, das das frühzeitige Erkennen von Antriebsstrangsschwingungen und die Bestimmung eines Antriebrades, an dem die Dämpfungsmaßnahme ansetzt, zum Gegenstand hat.

Durch die Gegenmaßnahmen soll generell eine Schwingungsanregung verhindert werden und bei erkannter Schwingung Druckabbau, Druckaufbau und Druckkonstanthalten derart gesteuert werden, daß ein schwingendes Rad aktiv gedämpft wird.

Zur Vermeidung der Schwingungsanregung wird ein frühzeitiger Druckaufbau, der bei bestimmten Bedingungen schon in der eigentlichen Druck-Konstanthaltephase sinnvoll ist, ausgeschlossen, wenn Druck-Abbauvorgänge und - aufbauvorgänge direkt hintereinander erfolgen.

Gerät der Antriebsstrang trotzdem ins Schwingen oder setzen sich die Schwingungen fort, werden weitere Maßnahmen wirksam.

Als wirkungsvollste Maßnahme hat sich ein Druckabbaustop erwiesen, bei dem das Druckniveau im Radbremszylinder eines der beiden schwingenden Räder bis zum Erreichen von maximal 50 % relativem Radschlupf aufrechterhalten wird. Dies führt zu einem tiefen Schlupfeinlauf des Rades, wobei die Schwingung stark abklingt. Die Schwingungsdämpfung wird über das Differential auch auf das zweite Antriebsrad der Achse übertragen, für das kein Druckstop gilt.

Ist ein relativer Radschlupf von mehr als 50 % erreicht, wird dem Rad durch gepulsten Druckabbau die Möglichkeit der Wiederbeschleunigung gegeben. Hierdurch und durch die Tatsache, daß diese Maßnahme nur für ein Rad angewendet wird, wird erreicht, daß der Motor nicht ausgeht.

**Patentansprüche**

1.  Verfahren zum Erkennen und Dämpfen von Antriebsstrangschwingungen, bei dem während eines geregelten Bremsmanövers zur Erkennung der Antriebsstrangschwingungen, der Geschwindigkeitsverlauf der angetriebenen Räder analysiert und das Auftreten von Schwingungen mit einer für Antriebsstrangschwingungen typischen Frequenz festgestellt wird, **dadurch gekennzeichnet, daß** beim Auftreten von Schwingungen mit einer innerhalb eines vorgegebenen, kritischen Bereichs liegenden Frequenz, der den Frequenzbereich typischer Antriebsstrangschwingungen einschließt, radindividuell die Dauer des Schwingungszustandes festgestellt oder die Anzahl der aufeinanderfolgenden Schwingungen oder Halbschwingungen gezählt wird und daß beim Erreichen einer vorgegebenen Mindestdauer des Schwingungszustandes oder eines vorgegebenen Zählerstandes, wenn gleichzeitig die Fahrzeugbeschleunigung über einem vorgegebenen Grenzwert liegt und am zweiten Rad der gleichen Achse keine Schwingungserkennung ausgelöst ist, das Erkennen von Antriebsstrangschwingungen signalisiert wird.

2.  Verfahren nach Anspruch 1, **dadurch gekennzeichnet, daß** ein Bereich zwischen 3 und 30 Hz, insbesondere zwischen 5 und 23 Hz, als kritisch vorgegeben wird.

3.  Verfahren nach Anspruch 1 oder 2, **dadurch gekennzeichnet, daß** das Erreichen eines Zählerstandes von 4 bis 8 aufeinanderfolgenden Halbwellen, insbesondere von mehr als 4 aufeinanderfolgenden Halbwellen, als Voraussetzung für die Schwingungserkennung vorgegeben wird.

4.  Verfahren nach einem oder mehreren der Ansprüche 1 bis 3, **dadurch gekennzeichnet, daß** eine Fahrzeugbeschleunigung, die größer ist als -0,6 g bis -0,3 g, insbesondere größer als -0,5 g, als Voraussetzung für die Schwingungserkennung vorgegeben wird.

5.  Verfahren nach einem oder mehreren der Ansprüche 1 bis 4, **dadurch gekennzeichnet, daß** zum Dämpfen der Antriebsstrangschwingungen nach dem Erkennen von kritischen Schwingungen an einem nach vorgegebenen Kriterien ausgewählten Antriebsrad die Bremsdruckregelung dieses Rades für eine bestimmte Zeitspanne auf eine Sonderregelung umgeschaltet wird.

6.  Verfahren nach Anspruch 5, **dadurch gekennzeichnet, daß** nach dem Einsetzen der Sonderregelung ein Bremsdruckabbau verhindert und ein regelungsbedingter Bremsdruckaufbau verzögert und/oder nur mit flachem Gradienten zugelassen wird.

7.  Verfahren nach Anspruch 5, **dadurch gekennzeichnet, daß** während der Sonderregelung der Bremsdruck zumindest annähernd kostantgehalten wird.

8.  Verfahren nach einem oder mehreren der Ansprüche 5 bis 7, **dadurch gekennzeichnet, daß** die Sonderregelung beendet wird, sobald der Bremsschlupf des Rades einen vorgegebenen Grenzwert, insbesondere einen relativen Schlupfwert in der Größenordnung zwischen 40 und 60 %, z.B. 50 %, überschreitet.

9.  Verfahren nach einem oder mehreren der Ansprüche 5 bis 8, **dadurch gekennzeichnet, daß** Radschwingungen, die in einem vorgegebenen, für Antriebsstrangschwingungen typischen Frequenzbereich liegen, die bei einer über einem Grenzwert liegenden Fahrzeugbeschleunigung auftreten und die über eine vorgegebene Zeitspanne oder Schwingungszahl hinaus andauern, als kritisch bewertet werden.

**Claims**

1.  Method of recognizing and damping drive train oscillations, wherein during a controlled brake maneuver the speed variation of the driven wheels is analyzed and the occurrence of oscillations having a frequency typical of drive train oscillations is established in order to recognize the drive train oscillations,
    **characterized in that** upon the occurrence of oscillations with a frequency that lies within a predetermined critical range including the frequency range of typical drive train oscillations, the duration of the oscillating condition on each individual wheel is established or the number of the successive oscillations or semi-wave oscillations is counted, and **in that**, when a predetermined minimum duration of the oscillating condition or a predetermined counter reading is reached, recognition of drive train oscillations is indicated if, simultaneously, the vehicle acceleration is above a predetermined limit value and if oscillation recognition has not been triggered on the second wheel of the same axle.

2.  Method as claimed in claim 1,
    **characterized in that** a range between 3 and 30 hertz, in particular between 5 hertz and 23 hertz, is predefined as being critical.

3.  Method as claimed in claim 1 or claim 2,
    **characterized in that** the reaching of a counter reading of four to eight successive semi-wave oscillations, especially of more than four successive semi-wave oscillations, is preset as a condition for the oscillation recognition.

4.  Method as claimed in any one or more of claims 1 to 3,
    **characterized in that** a vehicle acceleration which is greater than -0.6 g to -0.3 g, especially is greater than -0.5 g, is preset as a condition for the oscillation recognition.

5.  Method as claimed in any one or more of claims 1 to 4,
    **characterized in that** for damping drive train oscillations after critical oscillations are recognized on a drive wheel selected according to predetermined criteria, the braking pressure control of this wheel is switched over to a special control for a defined interval.

6.  Method as claimed in claim 5,
    **characterized in that** upon the commencement of the special control, braking pressure reduction is prevented, and a braking pressure increase induced by the control is allowed with delay and/or with a flat gradient only.

7.  Method as claimed in claim 5,
    **characterized in that** the braking pressure is maintained at least roughly constant during the special control.

8.  Method as claimed in any one or more of claims 5 to 7,

**characterized in that** the special control is terminated as soon as the brake slip of the wheel exceeds a predetermined limit value, especially a relative slip value in the order ranging between 40 % and 60 %, for example, 50 %.

9. Method as claimed in any one or more of claims 5 to 8,
**characterized in that** wheel oscillations are assessed as critical which lie in a predefined frequency range typical of drive train oscillations, which occur at a vehicle acceleration that exceeds a limit value, and which last longer than a predetermined interval or number of oscillations.


**Revendications**

1. Procédé permettant de constater et d'amortir des vibrations de ligne de traction, selon lequel, pendant une manoeuvre de freinage objet d'une régulation, pour constater les vibrations de ligne de traction, la variation dans le temps de la vitesse des roues motrices est analysée et l'apparition de vibrations à une fréquence typique pour des vibrations de ligne de traction est déterminée, **caractérisé en ce que**, lors de l'apparition de vibrations à une fréquence située à l'intérieur d'une fourchette critique préfixée qui contient la fourchette de fréquences de vibrations de ligne de traction typiques, la durée de l'état de vibrations est déterminé roue par roue ou le nombre des vibrations ou demi-vibrations se succédant est compté roue par roue et **en ce que**, lorsqu'est atteinte une durée minimale préfixée de l'état de vibrations ou un état de compteur préfixé, si en même temps l'accélération de véhicule est située au-dessus d'une valeur limite préfixée et, sur la seconde roue du même essieu, aucune constatation de vibrations n'est déclenchée, la constatation de vibrations de ligne de traction est signalée.

2. Procédé suivant la revendication 1, **caractérisé en ce qu'**une fourchette comprise entre 3 et 30 Hz, notamment entre 5 et 23 Hz, est préfixée comme étant critique.

3. Procédé suivant la revendication 1 ou 2, **caractérisé en ce que** le fait qu'est atteint un état de compteur de 4 à 8 demi-ondes successives, notamment de plus de 4 demi-ondes successives, est préfixé comme condition préalable pour la constatation de vibrations.

4. Procédé suivant une ou plusieurs des revendications 1 à 3, **caractérisé en ce qu'**une accélération de véhicule qui est supérieure à - 0,6 g à - 0,3 g, notamment supérieure à - 0,5 g, est préfixée comme condition préalable pour la constatation de vibrations.

5. Procédé suivant une ou plusieurs des revendications 1 à 4, **caractérisé en ce que**, pour l'amortissement des vibrations de ligne de traction, après la constatation de vibrations critiques sur une roue motrice sélectionnée d'après des critères préfixés, la régulation de pression de frein de cette roue est commutée, pour un intervalle de temps déterminé, sur une régulation spéciale.

6. Procédé suivant la revendication 5, **caractérisé en ce qu'**après l'entrée en fonction de la régulation spéciale, une suppression de pression de frein est empêchée et l'établissement de pression de frein dû à la régulation est retardé et/ou n'est autorisé qu'avec un gradient plat.

7. Procédé suivant la revendication 5, **caractérisé en ce que**, pendant la régulation spéciale, la pression de frein est maintenue au moins approximativement constante.

8. Procédé suivant une ou plusieurs des revendications 5 à 7, **caractérisé en ce qu'**il est mis fin à la régulation spéciale dès que le glissement de frein de la roue dépasse une valeur limite préfixée, notamment une valeur de glissement relative de l'ordre de 40 à 60%, par exemple 50%.

9. Procédé suivant une ou plusieurs des revendications 5 à 8, **caractérisé en ce que** des vibrations de roue qui sont situées dans une fourchette de fréquences préfixée, typique pour des vibrations de ligne de traction, qui apparaissent pour une accélération de véhicule située au-dessus d'une valeur limite et qui durent au-delà d'un intervalle de temps préfixé ou d'un nombre de vibrations préfixé, sont estimées comme étant critiques.

Fig.1

Fig.2a

Ph2 : Druckabbau
Ph3 : Druckaufbau
Ph4 : Druckhalten

Fig.2b

Fig.3

BY_DRIVE_REC 1

$t_2$

$v_1$

BY_DRIVE_REC 2

1 3

BY_DRIVE 1

5

2 4

$v_2$

BY_DRIVE 2

$p1$

$p2$

$t_0$     $t_1$   $t_2$   $t_3$      $t_4$

EP 0 960 042 B1